# DEMANDE DE BREVET EUROPEEN

(11) **EP 0 881 371 A1**
(43) Date de publication de la demande: **02.12.1998**
(21) Numéro de dépôt: 98401168.4
(22) Date de dépôt: 15.05.1998
(51) Int. Cl.: F02B 23/10

(54) **Moteur à injection directe et allumage commandé comportant trois soupapes par cylindre**

(30) Priorité: 30.05.1997 FR 9706651
(71) Demandeur: RENAULT, 92109 Boulogne-Billancourt (FR)
(72) Inventeur: Dupont, Alain, 78860 Saint Nom la Breteche (FR)
(74) Mandataire: Fernandez, Francis

(57) **Abrégé**

Moteur à combustion interne comprenant une chambre de combustion (1) délimitée par la paroi supérieure d'un piston (3) monté dans un alésage cylindrique (2) et la paroi inférieure d'une culasse (4) en forme de toit (13) dont l'arête (12) s'étend parallèlement à l'axe longitudinal du moteur, deux conduits d'admission (5,6) formés à travers la culasse (4) et débouchant d'un côté de la surface en toit (13) par deux orifices distincts d'admission (7,8) obturés par des soupapes, un conduit d'échappement (9) formé à travers la culasse (4) et débouchant du côté opposé aux orifices d'admission par un orifice d'échappement (11) obturé par une soupape, un injecteur de carburant (16) et une bougie d'allumage (17) débouchant dans la chambre de combustion, caractérisé en ce que le piston est pourvu sur la paroi supérieure de celui-ci d'une cavité (15) excentrée, ladite cavité (15) étant décalée à la fois du côté opposé aux orifices d'admission (7,8) et latéralement par rapport à l'orifice d'échappement (11).

## Description

La présente invention concerne un moteur à combustion interne à allumage commandé et injection directe de carburant comportant trois soupapes par cylindre. L'invention concerne plus particulièrement la forme de la chambre de combustion d'un tel moteur.

Il est connu par le document FR-A-2.650.629 de réaliser un moteur multicylindre à injection directe du type comportant trois soupapes par cylindre. Selon cet art antérieur, le moteur qui comprend des moyens d'admission et d'échappement, des moyens d'injection du carburant, des moyens d'allumage pour provoquer la combustion du mélange air/carburant, à l'intérieur du moteur, est caractérisé en ce qu'il comprend :
- une culasse formant couvercle au-dessus de chacun des cylindres dans laquelle est ménagée une cavité qui constitue la chambre de combustion du cylindre et communique directement avec l'extrémité supérieure du cylindre ;
- deux soupapes d'admission de l'air frais montées dans la culasse au voisinage de la cavité parallèlement à l'axe du cylindre ;
- une soupape d'échappement des gaz brûlés montée dans la culasse parallèlement à l'axe du cylindre et débouchant dans la partie supérieure de la cavité formant la chambre de combustion ;
- une bougie d'allumage montée à travers une paroi de la chambre de combustion et dirigée vers l'intérieur de cette chambre ;
- un injecteur de carburant débouchant de façon inclinée dans une paroi de la chambre de combustion au voisinage de la bougie d'allumage ;
   l'ensemble formé par les soupapes d'admission et d'échappement, la cavité constituant la chambre de combustion et la bougie d'allumage étant disposées de telle sorte que lorsque le piston du cylindre effectue un mouvement de translation vers le haut, l'air ou le mélange air/carburant soit chassé vers la chambre de combustion en créant une micro-turbulence favorisant la combustion du mélange carburé.

La chambre de combustion selon cet art antérieur est donc formée par une cavité s'étendant dans la culasse, cavité dans laquelle débouchent la soupape d'échappement en partie supérieure ainsi qu'un injecteur et une bougie. Cette disposition bien que favorable à un fonctionnement en charge stratifiée, a pour inconvénient d'augmenter sensiblement la hauteur de la culasse et donc l'encombrement du moteur.

La présente invention a donc pour objet de réaliser un moteur à combustion interne à allumage commandé et injection directe de carburant de conception nouvelle qui remédie aux inconvénients précités.

Le moteur à combustion interne selon l'invention, est donc du type comprenant :
- une chambre de combustion délimitée par la paroi supérieure d'un piston monté dans un alésage cylindrique et la paroi inférieure d'une culasse en forme de toit dont l'arête s'étend entre les orifices d'admission et d'échappement ;
- deux conduits d'admission formés à travers la culasse et débouchant d'un côté de la chambre de combustion par deux orifices distincts d'admission obturés par des soupapes ;
- un conduit d'échappement formé à travers la culasse et débouchant dans la chambre de combustion du côté opposé aux orifices d'admission par un orifice d'échappement obturé par une soupape ;
- un injecteur de carburant et une bougie d'allumage débouchant dans la chambre de combustion.

Selon l'invention, le moteur à combustion interne est caractérisé en ce qu'une cavité excentrée est ménagée dans la paroi supérieure du piston, cette cavité étant décalée à la fois du côté opposé aux orifices d'admission et latéralement par rapport à l'orifice d'échappement.

Selon une autre caractéristique du moteur à combustion interne objet de l'invention, l'un des orifices d'admission s'étend sensiblement à l'opposé de l'orifice d'échappement tandis que l'autre orifice d'admission s'étend sensiblement à l'opposé de la cavité aménagée à la partie supérieure du piston.

Selon une autre caractéristique du moteur à combustion interne objet de l'invention, les deux conduits d'admission s'étendent parallèlement l'un à l'autre à travers la culasse.

Selon une autre caractéristique du moteur à combustion interne objet de l'invention, les deux conduits d'admission sont adaptés pour générer dans la chambre de combustion un mouvement aérodynamique ordonné.

Selon une autre caractéristique du moteur à combustion interne objet de l'invention, la bougie d'allumage débouche à travers la paroi inférieure de la culasse en forme de toit délimitant la chambre de combustion, au voisinage de l'arête.

Selon une autre caractéristique du moteur à combustion interne objet de l'invention, la bougie d'allumage s'étend parallèlement à l'axe du cylindre.

Selon une autre caractéristique du moteur à combustion interne objet de l'invention, la bougie d'allumage débouche au voisinage de l'axe du cylindre.

Selon une autre caractéristique du moteur à combustion interne objet de l'invention, l'injecteur de carburant, qui est disposé de façon excentrée, s'étend à côté du conduit d'échappement de façon à faire face à la cavité aménagée à la partie supérieure du piston.

Selon une autre caractéristique du moteur à combustion interne objet de l'invention, l'injecteur de carburant est adapté de façon à diriger un jet de carburant directement vers la bougie.

Selon une autre caractéristique du moteur à combustion interne objet de l'invention, l'injecteur de carburant est adapté de façon à diriger un jet de carburant directement vers le fond de la cavité aménagée à la partie supérieure du piston, ladite cavité étant alors conformée pour diriger ce jet de carburant vers la bougie.

On comprendra mieux les buts, aspects et avantages de la présente invention, d'après la description donnée ci-après de deux modes de réalisation de l'invention, présentés à titre d'exemples non limitatifs, en se référant aux dessins annexés, dans lesquels :
la figure 1A est une vue de dessus schématique, illustrant un premier mode de réalisation d'un moteur à combustion interne selon l'invention ;
les figures 1B et 1C sont des vues en coupe selon respectivement les lignes B-B et C-C de la figure 1A ;
la figure 1D est une vue de dessus du piston représenté en coupe sur les figures 1B et 1C.
les figures 2A, 2C, 2D illustrent de façon similaire respectivement aux figures 1A, 1C, 1D un second mode de réalisation d'un moteur à combustion interne selon l'invention.

Conformément aux figures, seules les parties caractéristiques des moteurs nécessaires à la compréhension de l'invention ont été figurées. Pour simplifier la lecture, les mêmes éléments portent les mêmes références d'une figure à l'autre. Par ailleurs, les éléments du second mode de réalisation ont pour numéros de référence le numéro 2 suivi du numéro (sur deux chiffres) de l'élément correspondant du premier mode de réalisation de façon à ne former qu'un seul nombre, par exemple le piston du second mode de réalisation est référencé 203 alors que le piston du premier mode de réalisation est référencé 3.

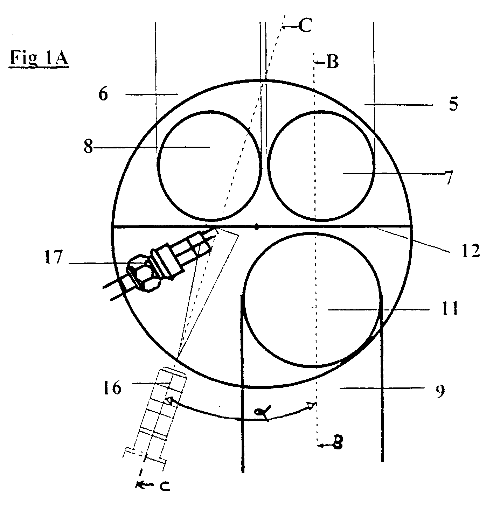

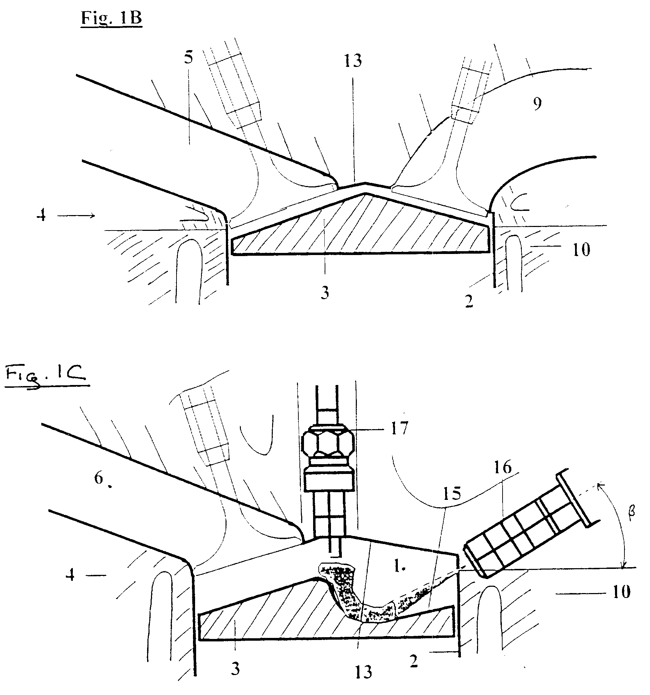

Le premier mode de réalisation de l'invention décrit conformément aux figures 1A à 1D, concerne un moteur à combustion interne du type multicylindre à allumage commandé et à injection directe de carburant.

Le corps principal de ce moteur à combustion interne est principalement formé par une culasse 4 surmontant un bloc carter-cylindres 10. Une pluralité d'alésages cylindriques ou cylindres, identiques au cylindre 2 représenté, sont agencés dans le carter-cylindres 10. Chaque cylindre 2 loge un piston 3 dont le mouvement de va-et-vient est destiné à être converti en un mouvement rotatif par un système bielle-vilebrequin non représenté.

Dans la partie supérieure du cylindre 2 s'étend une chambre de combustion 1 qui est délimitée par la face supérieure du piston 3, la face inférieure 13 de la culasse 4 s'étendant au dessus du piston 3 et les parois intérieures du cylindre 2. La paroi inférieure 13 de la culasse est en forme de toit à deux pentes dont l'arête 12 s'étend sensiblement parallèlement à l'axe longitudinal de la culasse 4. L'angle formé par les deux pentes du toit 13 est par exemple compris entre 35° et 55°.

La culasse 4 est traversée transversalement pour chaque chambre de combustion 1 par deux conduits d'admission 5, 6 en air frais comburant et par un conduit d'échappement 9 des gaz brûlés, s'étendant respectivement de part et d'autre de l'arête 12 entre une face latérale de la culasse 4 et la chambre de combustion 1. Ces conduits 5, 6 et 9 débouchent respectivement dans la chambre de combustion 1 par des orifices d'admission 7 et 8 et d'échappement 11 qui sont munis de soupapes à tige permettant d'en contrôler l'ouverture.

Les deux orifices d'admission 7 et 8 débouchent donc dans la chambre de combustion 1, d'un même côté par rapport à l'arête 12, tandis que l'orifice d'échappement 11 débouche dans la chambre de combustion 1 du côté opposé aux orifices d'admission. L'orifice d'échappement 11 est positionné de façon excentrée, sensiblement en vis-à-vis de l'orifice d'admission 7. L'angle formé entre les soupapes d'admission et d'échappement correspond à l'angle du toit 13 et est donc compris entre 35° et 55°. Par ailleurs, le calibrage des orifices d'admission est adapté pour occuper au maximum la face d'admission du toit 13, en limite d'effet de paroi.

Les deux conduits d'admission 5 et 6 qui s'étendent sensiblement parallèlement l'un à l'autre à travers la culasse 4 sont de plus conformés pour générer dans la chambre de combustion 1 un mouvement ordonné de l'air, tel qu'un tourbillon de type Tumble, c'est-à-dire d'axe perpendiculaire à l'axe du cylindre 2, orienté de l'admission vers l'échappement. Cette conformation est obtenue soit directement par la forme des conduits 5 et 6, qui sont alors rectilignes et inclinés par rapport à l'axe du cylindre 2, soit encore par des moyens pilotés non figurés qui s'étendent dans les conduits d'admission 5 et 6 et qui génèrent un Tumble d'intensité variable.

Une bougie 17 est logée dans la culasse parallèlement à l'axe du cylindre et débouche sensiblement au niveau de l'arête 12 du toit 13. Le positionnement des électrodes de la bougie 17 est quelque peu excentré par rapport à l'axe du cylindre 2 du côté opposé à l'orifice d'échappement 11. Par ailleurs, le nez d'un électro-injecteur de carburant 16, monté latéralement au conduit d'échappement 9, débouche à la périphérie du toit 13 de la chambre de combustion 1. L'injecteur 16 est connecté classiquement à un circuit d'alimentation en carburant sous pression non figurée. La quantité de carburant injectée est déterminée par le système électronique de commande du moteur, également non figuré, qui détermine le phasage et la durée d'ouverture de l'injecteur 16 suivant les conditions de fonctionnement du moteur et notamment la charge et le régime.

L'injecteur 16 s'étend dans la zone de la culasse 4 laissée libre par l'excentrement du conduit d'échappement 9. Cet injecteur est incliné en direction du piston 3 d'un angle α par rapport au plan de joint de la culasse 4 et il est incliné en direction de la bougie 17 d'un angle β par rapport à un plan transversal perpendiculaire au plan médian axial de la culasse 4. De préférence, mais sans que cela soit limitatif de l'invention, l'angle α est compris entre 30° et 60°, tandis que l'angle β est lui compris entre 10° et 20°.

La face supérieure du piston 3 présente une forme générale en toit complémentaire à la surface en toit 13 de la culasse 4 de façon à générer un effet de chasse adapté. L'intensité et la direction de cette chasse, qui sont notamment déterminées par l'épaisseur de la lame d'air entre le piston et la culasse au Point Mort Haut, sont ajustées pour prolonger, en fin de compression, le mouvement de Tumble engendré lors de l'admission de l'air frais dans la chambre de combustion 1.

La face supérieure du piston 3 présente par ailleurs, au droit de l'impact du jet de carburant provenant de l'injecteur 16, une cavité 15. Cette cavité 15 est excentrée latéralement dans la partie de la chambre de combustion 1 s'étendant entre l'injecteur 16 et la bougie 17. La cavité 15 a une ouverture sensiblement en forme d'un secteur de disque délimité par l'arête 12 et par le plan de symétrie des conduits d'admission s'étendant perpendiculairement à l'arête 12 et passant par l'axe du cylindre. Les parois intérieures de la cavité 15 sont adaptées pour diriger le jet de carburant vers le point d'allumage, c'est-à-dire vers les électrodes de la bougie, comme cela est montré à la figure 1C.

Conformément à la description donnée ci-dessus du premier mode de réalisation du moteur objet de l'invention, le fonctionnement d'un tel moteur est le suivant.

L'air frais introduit dans la chambre 1 lors de l'ouverture des soupapes d'admission commandant l'ouverture des orifices 7 et 8, forme un tourbillon de type Tumble d'axe perpendiculaire à l'axe du cylindre 2. Ce mouvement se poursuit dans la chambre 1 au fur et à mesure de la remontée du piston dans la cavité 15 et est alimenté notamment par les effets de chasse enfin de compression.

A un instant prédéterminé du cycle (θ° vilebrequin avant le Point Mort Haut) et pendant une durée adaptée, est opérée l'injection du carburant. Le jet de carburant provenant de l'injecteur 16 vient alors se mélanger à l'air sans en contrarier le mouvement. Le carburant est ainsi entraîné vers la bougie 17 après avoir balayé le fond de la cavité 15 du piston dont la température favorise la vaporisation. L'allumage se produit au voisinage du Point Mort Haut avec une avance prédéterminée et déclenche la combustion qui initiée aux électrodes de la bougie 17 se propage dans toute la chambre de combustion 1 au fur et à mesure de la descente du piston 3.

Suivant le point de fonctionnement du moteur, le phasage de l'injection, la quantité de carburant ainsi que l'avance à l'allumage sont adaptés pour obtenir tantôt un fonctionnement de type stratifié (notamment à faible charge), tantôt un fonctionnement de type homogène (notamment à pleine charge).

Bien évidemment, tous les paramètres du moteur, et notamment les dimensions de la cavité 15, les positionnements de la bougie et de l'injecteur ainsi que la direction et l'intensité du Tumble ainsi que celles de la chasse sont adaptés par des essais appropriés en fonction de la cylindrée et des caractéristiques couple/puissance souhaitées. Pour optimiser les performances du moteur notamment lors d'un fonctionnement en mélange homogène, l'excentrement de la bougie par rapport à l'axe du cylindre sera limité, de préférence cet excentrement n'excède pas 20% du diamètre du cylindre 2.

Selon ce premier mode de réalisation du moteur selon l'invention, la création d'un mouvement aérodynamique ordonné dans la chambre de combustion 1, est importante pour favoriser notablement la combustion en permettant de contrôler la stabilité de la distribution en carburant. De plus, la mise en rotation du mélange combustible permet d'améliorer la stabilité du moteur notamment pour des points de fonctionnement en mélange pauvre homogène.

Il est possible, en variante de réalisation de ce premier mode de réalisation, d'utiliser d'autres mouvements ordonnés comme par exemple un mouvement de type Tumble inverse, c'est-à-dire un tourbillon d'axe perpendiculaire à l'axe du cylindre 2 et orienté de l'échappement vers l'admission. Un tel mouvement de Tumble inverse est notamment obtenu en utilisant des conduits d'admission s'étendant sensiblement parallèlement à l'axe du cylindre 2. Il est également possible d'utiliser un mouvement de type Swirl, c'est-à-dire un tourbillon d'axe parallèle à l'axe du cylindre 2, en utilisant des conduits d'admission conformés en conséquence ou en utilisant des moyens pilotés d'obturation de l'un des conduits d'admission ou bien encore en utilisant des moyens pilotés de déconnexion de l'une des soupapes d'admission, la forme de la cavité 15 réalisée dans le piston étant alors adaptée à ces mouvements aérodynamiques.

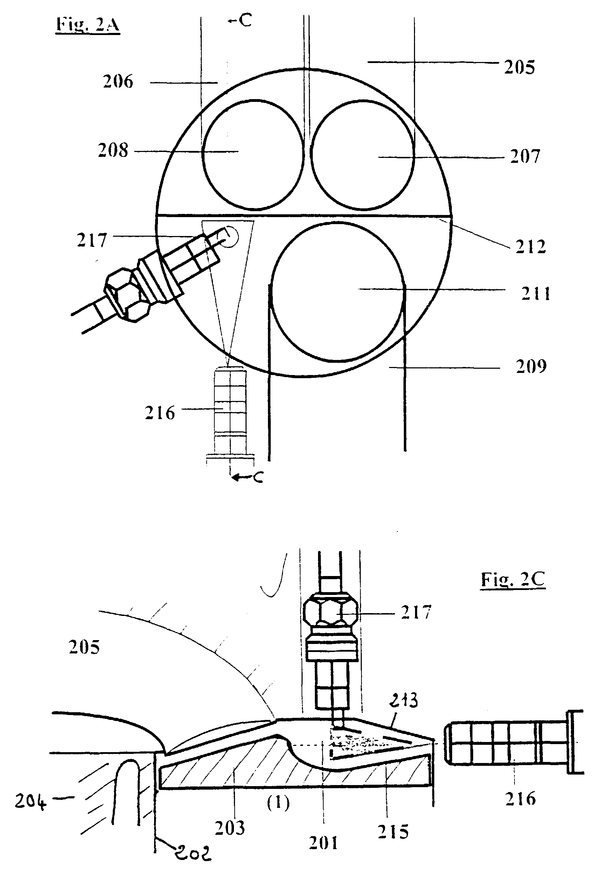

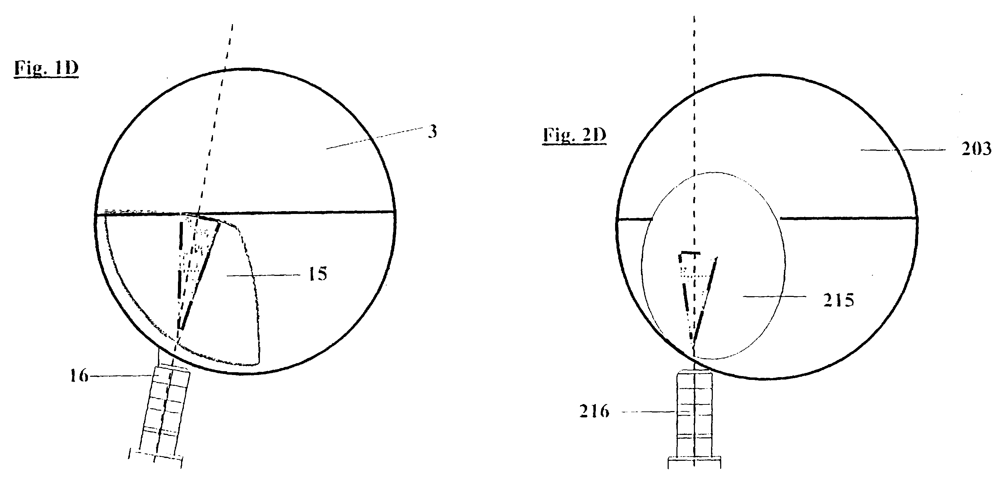

Dans la seconde variante de réalisation illustrée sur les figures 2A, 2C et 2D, seules les formes des conduits d'admission 206 et 205, de la cavité 215 du piston 203 et de la position de l'injecteur de carburant 216 sont modifiées par rapport à la première variante qui vient d'être décrite. Ces modifications permettent d'obtenir une stratification directement par le jet plutôt que par les parois et par l'aérodynamique comme avec le premier mode de réalisation.

La chambre de combustion 201 de ce second mode de réalisation est délimitée conformément à la présente invention par la face supérieure du piston 203, la face inférieure 213 de la culasse 204 s'étendant au-dessus du piston 203 et les parois intérieures du cylindre 202. La paroi inférieure 213 de la culasse est en forme de toit à deux pentes dont l'arête 212 s'étend sensiblement parallèlement à l'axe longitudinal de la culasse 204.

La culasse 204 est traversée transversalement pour chaque chambre de combustion 201, par deux conduits d'admission 205, 206 en air frais comburant et par un conduit d'échappement 209 des gaz brûlés, s'étendant respectivement de part et d'autre de l'arête 212 entre une face latérale de la culasse 204 et la chambre de combustion 201. Ces conduits 205, 206 et 209 débouchent respectivement dans la chambre de combustion 201 par des orifices d'admission 207 et 208 et d'échappement 211 qui sont munis de soupapes à tige permettant d'en contrôler l'ouverture.

Les deux orifices d'admission 207 et 208 débouchent donc dans la chambre de combustion 201, d'un même côté par rapport à l'arête 212, tandis que l'orifice d'échappement 211 débouche dans la chambre de combustion 201 du côté opposé aux orifices d'admission. L'orifice d'échappement 211 est positionné de façon excentrée, sensiblement en vis-à-vis de l'orifice d'admission 207.

Les deux conduits d'admission 205 et 206 qui s'étendent sensiblement parallèlement l'un à l'autre à travers la culasse 204 sont conformés notamment d'un point de vue perméabilité pour favoriser le remplissage de la chambre de combustion 201.

Une bougie 217 débouche sensiblement au niveau de l'arête 212 du toit 213. Le positionnement des électrodes de la bougie 217 est quelque peu excentré par rapport à l'axe du cylindre 202 du côté opposé à l'orifice d'échappement 211. Par ailleurs, le nez d'un électro-injecteur de carburant 216, monté latéralement au conduit d'échappement 209, débouche à la périphérie du toit 213 de la chambre de combustion 201.

L'injecteur 216 s'étend dans la zone de la culasse 204 laissée libre par l'excentrement du conduit d'échappement 209. Cet injecteur 216 est positionné de façon à envoyer le jet de carburant directement sur les électrodes de la bougie 217 en évitant les parois de la culasse 204 et du piston 203. En particulier au débouché du nez de l'injecteur 216 le toit 213 de la chambre de combustion est adapté pour permettre l'épanouissement du jet sans qu'il y est mouillage de la paroi avant qu'il n'atteigne les électrodes de la bougie.

L'injecteur 216 est, par ailleurs, disposé sensiblement parallèlement au plan de joint de la culasse 204 de façon à limiter l'injection du carburant sur le piston 203 et il est incliné d'un angle β par rapport à un plan transversal perpendiculaire au plan médian axial de la culasse 204 de façon à diriger son jet vers la bougie 217. Cet angle β est compris entre 0° et 30° suivant l'excentrement de la bougie 217 par rapport à l'axe du cylindre 202.

La face supérieure du piston 3 présente une forme générale en toit complémentaire à la surface en toit 13 de la culasse 4 de façon à générer un effet de chasse adapté. L'intensité et la direction de cette chasse, qui sont notamment déterminées par l'épaisseur de la lame d'air entre le piston et la culasse au Point Mort Haut, sont adaptées pour prolonger, en fin de compression, le mouvement de Tumble.

La face supérieure du piston 203 présente par ailleurs, une cavité de taille adaptée pour atteindre le taux de compression souhaité (de préférence entre 10.5 et 13). Cette cavité 215 excentrée latéralement dans la partie de la chambre de combustion 201 s'étendant entre l'injecteur 216 et la bougie 217, a une ouverture de forme par exemple elliptique. Le dessin de la cavité est plus particulièrement adapté de façon à ce que les effets de chasse ne créent pas de mouvements de convection rédhibitoires pour la stratification et l'initiation de la combustion. La cavité dans le piston permet également d'éviter que le jet de carburant n'atteigne le piston 203 avant d'atteindre les électrodes.

Conformément à la description donnée ci-dessus du second mode de réalisation du moteur objet de l'invention, le fonctionnement d'un tel moteur est le suivant.

A un instant prédéterminé du cycle (θ° vilebrequin avant le Point Mort Haut) et pendant une durée adaptée, est déclenchée l'injection du carburant. Le jet de carburant provenant de l'injecteur 216 est dirigé directement vers l'électrode. Lorsque les électrodes sont entourées de vapeur de carburant, on réalise alors l'allumage, ce qui déclenche la combustion. Cette combustion initiée aux électrodes de la bougie 217 se propage dans toute la chambre de combustion 201 au fur et à mesure de la descente du piston 3 grâce notamment à la turbulence générée par la chasse.

Ce second mode de réalisation permet grâce à une stratification par le jet, de se dispenser d'avoir à réaliser une aérodynamique interne et donc d'utiliser des conduits d'admission de formes adaptées.

Bien entendu, l'invention n'est nullement limitée aux modes de réalisation décrits et illustrés qui n'ont été donnés qu'à titre d'exemples non limitatifs.

Au contraire, l'invention comprend tous les équivalents techniques des moyens décrits ainsi que leurs combinaisons si celles-ci sont effectuées suivant son esprit.

## Revendications

1. Moteur à combustion interne comprenant :
- une chambre de combustion (1;201) délimitée par la paroi supérieure d'un piston (3;203) monté dans un alésage cylindrique (2;202) et la paroi inférieure d'une culasse (4;204) en forme de toit (13;213) dont l'arête (12;212) s'étend parallèlement à l'axe longitudinal du moteur ;
- deux conduits d'admission (5,6;205,206) formés à travers la culasse (4;204) et débouchant dans la chambre de combustion (1;201) d'un côté de la surface en toit (13;213) par deux orifices distincts d'admission (7,8;207,208) obturés par des soupapes ;
- un conduit d'échappement (9;209) formé à travers la culasse (4;204) et débouchant dans la chambre de combustion (1;201) du côté opposé aux orifices d'admission par un orifice d'échappement (11;211) obturé par une soupape ;
- un injecteur de carburant (16;216) et une bougie d'allumage (17,217) débouchant dans la chambre de combustion (1;201) ;
caractérisé en ce que :
- une cavité (15;215) excentrée est ménagée dans la paroi supérieure du piston (3;203), ladite cavité (15;215) étant décalée à la fois du côté opposé aux orifices d'admission (7,8;207,208) et latéralement par rapport à l'orifice d'échappement (11;211).

2. Moteur à combustion interne selon la revendication 1, caractérisé en ce qu'un premier orifice d'admission (7;207) s'étend sensiblement à l'opposé dudit orifice d'échappement (11;211) et en ce que le second orifice d'admission (8;208) s'étend sensiblement à l'opposé de ladite cavité (15,215).

3. Moteur à combustion interne selon l'une quelconque des revendications 1 à 2, caractérisé en ce que les deux conduits d'admission (5,6;205,206) s'étendent parallèlement l'un à l'autre à travers la culasse (4;204).

4. Moteur à combustion interne selon la revendication 3, caractérisé en ce que lesdits conduits d'admission (5,6;205,206) sont adaptés pour générer dans la chambre de combustion (1;201) un mouvement aérodynamique adapté.

5. Moteur à combustion interne selon l'une quelconque des revendications 1 à 4, caractérisé en ce que ladite bougie (17;217) débouche à travers ladite paroi inférieure de la culasse (4;204) en forme de toit (13;213), au voisinage de l'arête (12;212).

6. Moteur à combustion interne selon la revendication 5, caractérisé en ce que ladite bougie (17;217) s'étend parallèlement à l'axe du cylindre (2;212).

7. Moteur à combustion interne selon l'une quelconque des revendications 5 à 6, caractérisé en ce que ladite bougie (17;217) débouche dans ladite chambre de combustion (1;201) au voisinage de l'axe du cylindre (2;202).

8. Moteur à combustion interne selon l'une quelconque des revendications 1 à 7, caractérisé en ce que ledit injecteur (16;216), disposé de façon excentré, s'étend à côté du conduit d'échappement (9;209) de façon à faire face à ladite cavité (15;215).

9. Moteur à combustion interne selon l'une quelconque des revendication 1 à 8, caractérisé en ce que ledit injecteur (216) est adapté de façon à diriger un jet de carburant directement vers la bougie (217).

10. Moteur à combustion interne selon l'une quelconque des revendication 1 à 8, caractérisé en ce que ledit injecteur (16) est adapté de façon à diriger un jet de carburant directement vers le fond de la cavité (15), ladite cavité étant alors conformée pour diriger ce jet de carburant vers la bougie (17).
